# EUROPEAN PATENT SPECIFICATION

(11) **EP 2 918 456 B1**
(45) Date of publication and mention of the grant of the patent: **25.09.2019**
(21) Application number: 14159507.4
(22) Date of filing: 13.03.2014
(51) Int. Cl.: B60R 22/22, F16B 37/04

(54) **A bracket and a fastening arrangement**
Klammer und Befestigungsanordnung
Support et agencement de fixation

(43) Date of publication of application: 16.09.2015
(73) Proprietor: Volvo Car Corporation, 40531 Göteborg (SE)
(72) Inventor: Aldeborg, Gert, 45197 Uddevalla (SE); Lundin, Thomas, 44290 Kungälv (SE)
(74) Representative: Valea AB

(56) References cited:
- EP-A1- 0 129 455
- EP-A2- 1 262 670
- DE-A1- 4 214 600
- DE-A1-102009 004 544
- FR-A1- 2 612 471
- GB-A- 386 755
- GB-A- 1 039 089
- GB-A- 2 247 607
- US-A1- 2007 012 854
- US-A1- 2008 260 489

## Description

### TECHNICAL FIELD

The present disclosure relates to a first bracket comprising a nut element, wherein the first bracket is adapted for attachment of a first object to the bracket. The disclosure further relates to a seat belt arrangement, a fastening arrangement, a safety arrangement, a vehicle, a use of the fastening arrangement and a method for attaching the first object to a second object by means of the fastening arrangement.

### BACKGROUND

When using a bolt and nut connection as a fastening arrangement, there is always a risk of dropping the bolt or the nut. If the original bolt or the nut is replaced, an erroneous size or type may be used as replacement for the dropped part either by mistake or if an appropriate substitute is unavailable. It may be difficult to find the dropped bolt or nut or it may be difficult to retrieve it. Further, if the bolt and nut connection is used to connect an object to another object or to a combined object in such a way that the head of the bolt is on one side of the combined object and the nut on the other side, there is also a risk of forgetting to include one of the objects, since there is a need to keep track of four things at the same time; the bolt, the nut, the first object and the second object.

Purely as an example, this problem may arise when connecting a seat belt end to a body floor or wall of a vehicle by means of a bolt and nut connection.

In order to decrease the risk of dropping the bolt of the bolt and nut connection, it is known to hold the bolt in one of the objects before mounting the nut and bolt connection. The bolt may then be held by having its head at one side of the object. A shaft of the bolt may protrude through the object and be held by an additional separate holding member on the other side, such that the bolt will not fall out of the object, since the bolt is stopped by the head in one direction and by the additional holding member in the other direction. However, the additional holding member is usually of a temporary nature, such as a support sheet made of cardboard, and is not intended to form a portion of the nut and bolt connection. It is hence desirable to remove the additional holding member before, or while, tightening the nut and bolt connection. The removal of the additional holding member represents an extra operational step. There is still a risk of dropping the nut.

Document JP 2001-65532 A discloses anchor mounting structure for a seat belt. A body of a vehicle is formed from aluminum and has an anchor plate made of aluminum welded to an inner panel of the body at the side of the inner panel directed towards the outside of the vehicle. A nut is mounted to the anchor plate on the outside of the vehicle. A bolt is screwed into the nut from the inside of the vehicle to mount an anchor of the seat belt to the anchor plate. The nut is provided with a collared flange and the anchor plate is provided with a folding back part for surrounding the flange of the nut.

According to JP 2001-65532 the nut is held in a fixed position by the anchor plate while the bolt is screwed into the nut. Hence, the nut will not be dropped. However, sometimes there is not enough room around the bolt to be able to grip the bolt such that it can be screwed into the nut.

Document US 2007/012854 A1 relates to a bracket and nut assembly including a first bracket, a second bracket and a captured nut. The first bracket includes a body portion with a first end with an aperture extending therethrough. The second bracket includes a first end with an elongated aperture and a second end moveably attached to the body portion of the first bracket. The captured nut is retained within the elongated aperture. The nut includes a first piece coupled to a second piece and is axially translatable and rotatable within the elongated aperture.

Document GB 2 247 607 A relates to a shoulder adjuster for a seat belt.

It is therefore desirable to find a solution for attaching an object to another object, which is applicable also when there is only a limited space available.

Document DE 10 2009 004 544 A1 discloses a belt bracket according to the preamble of claim 1.

It is further desirable that the solution minimizes, or preferably avoids, the risk of dropping the bolt or the nut.

### SUMMARY

The object of the present disclosure is to overcome or ameliorate at least one of the disadvantages of the prior art, or to provide a useful alternative.

The object above may be achieved by the subject-matter of claim 1. Embodiments are set forth in the appended dependent claims, in the following description and in the drawings. Thus, in a first aspect of the present invention there is provided a bracket, being a belt bracket, according to claim 1. The bracket comprises a bracket portion and a nut element. The nut element comprises threads. The bracket portion comprises an attachment member adapted for attachment of a first object to the bracket portion. The nut element is integrated into the bracket, such that the nut element is retained in the bracket portion and is rotatable around a rotational axis in relation to the bracket portion.

Since the nut element is integrated into the bracket, it cannot fall out of the bracket and be lost. Further, since the nut element is rotatable in relation to the bracket portion, it is possible to rotate the nut element, e.g. in order to tighten a nut and bolt connection. This is especially advantageous if it for some reason, e.g. due to limited space around the bolt head, is difficult or impossible to turn the bolt in order to tighten the nut and bolt connection. By being integrated into the bracket, the nut element is held securely in place without the need for any additional separate holding member, such as a support sheet placed beneath the bracket for keeping the nut element in place in the bracket.

The nut element may be of any known type, such that the nut element is turnable by means of standard tools. The nut element may e.g. have a hexagonal or any other polygonal shape. The nut element may e.g. be adapted to be turned by a wrench. The nut element may further be turned by a predefined torque, which has been selected to fulfil quality and/or safety criteria for the nut and bolt connection.

The bracket may be arranged such that the nut element is substantially prevented from movement in relation to the bracket portion in a direction along the rotational axis.

However, also in that case, a small movement in relation to the bracket portion in the direction along the rotational axis is allowed, since that movement corresponds to a clearance for the nut element, i.e. an interspace between the nut element and the bracket portion. The clearance provides space for the nut element to easily rotate in relation to the bracket portion. The clearance, and hence the small movement in relation to the bracket portion, in the direction along the rotational axis, may be in the range of 0 mm to 2 mm, preferably in the range of 0.2 mm to 1 mm. Hence, the nut element being substantially prevented from movement in relation to the bracket portion in a direction along the rotational axis, means that the nut element is prevented from movements larger than this clearance.

The first object is a seat belt, the bracket is a belt bracket adapted for attachment of the belt to the belt bracket and the attachment member adapted for attachment of the belt to the belt bracket. The attachment member may comprise or be constituted by an opening or a slot allowing passage of the belt, and/or a clamp, pin, catch etc. for holding the belt. As an alternative, or a complement, the belt may be glued, punched, welded etc. to the belt bracket. The belt bracket is suitable for attaching an end of a belt. The end of the belt may go through the opening/slot of the attachment member and be double-folded and attached to another portion of the belt at a location before the opening/slot, e.g. by means of gluing and/or sewing.

In a second aspect of the present invention there is provided a seat belt arrangement for a vehicle according to claim 4, the seat belt arrangement comprising a seat belt and a bracket as disclosed herein, wherein the seat belt is attached to the bracket by means of the attachment member. The bracket then constitutes a belt bracket. Preferably an end of the seat belt is attached to the bracket, as described above.

In a third aspect of the present invention there is provided a fastening arrangement according to claim 5 for attachment of the bracket to a second object. The fastening arrangement comprises a bolt and the bracket as disclosed herein. The bracket forms a first bracket of the fastening arrangement. The bolt comprises a head and a shaft. At least a portion of the shaft comprises threads adapted to cooperate with the threads of the nut element. The shaft is adapted to extend through the second object, such that a portion of the shaft protrudes from the second object and at least some of the threads are accessible for screwing the nut element onto the protruding part of the shaft of the bolt.

The second object is a substantially two-dimensional object, being a vehicle body floor.

The fastening arrangement may further, as an option, comprise a second bracket adapted for attachment of a third object to the second object, the second bracket being adapted to be attached to the second object by means of the bolt and the nut element, such that the first bracket and the second bracket are attached to the second object by means of the same bolt and the same nut element.

The second object is a body floor of a vehicle and the third object is a seat belt anchor. Purely as an example, the seat belt anchor may be intended for use by a first potential rear seat passenger when fastening his or her seat belt, while the belt may belong to a seat belt intended for use by a second potential rear seat passenger seated beside the first potential rear seat passenger.

In a fourth aspect of the present invention there is provided a use according to claim 7 of a fastening arrangement disclosed herein for attaching a belt to a substantially two-dimensional object, such as a plate, a panel or a floor, wherein the attachment member of the first bracket is used to attach the belt. Since the nut element is retained by the bracket portion, it is ascertained that the nut element is not dropped during attachment.

In case the fastening arrangement also comprises a second bracket, the fastening arrangement may be used for attaching a seat belt to a vehicle body floor by means of the first bracket, attaching a seat belt anchor by means of the second bracket, the belt and the seat belt anchor being fastened to the second object by the same bolt and the same nut element. Hence one single bolt and nut connection is enough for attaching two different components, i.e. the seat belt anchor and the belt. Since the nut element is retained by the bracket portion, it is ascertained that the nut element is not dropped or lost during attachment. Further since the nut element is incorporated into the first bracket, it is ascertained that the first bracket, attaching the belt, will not be left out by mistake when mounting the second bracket.

In a fifth aspect of the present invention there is provided a safety arrangement for a vehicle according to claim 9, said safety arrangement comprising a first bracket like the bracket as disclosed herein or comprising a fastening arrangement as disclosed herein. The safety arrangement may comprise a plurality of brackets and/or fastening arrangements. The safety arrangement may comprise one or more belts, e.g. seat belts. The safety arrangement may comprise one or more seat belt anchors.

In a sixth aspect of the present invention there is provided a vehicle, such as a car, van, bus, truck or lorry comprising the safety arrangement. The safety arrangement may also be comprised in a rail-bound vehicle such as a train wagon, in a vessel, such as a hovercraft or a ferry, or in an airborne vessel, such as an aeroplane or a helicopter.

In a seventh aspect of the present invention there is provided a method according to claim 10 for attaching the first object to a second object by means of the fastening arrangement.

The first object, the seat belt, is attached to the first bracket. The second object, the vehicle body floor, is assumed to have a first side and a second opposite side. The method comprises:
a) placing the bolt in the second object with the head of the bolt at the first side of the second object,
b) placing the first bracket at the second side of the second object, such that the nut element is located at the free end of the shaft of the bolt,
c) rotating the nut element around the bolt thereby engaging the threads of the nut with the threads of the bolt and attaching the first object to the second object.

After step a) the shaft of the bolt extends through the second object, such that a free end of the shaft protrudes from the second side of the second object and at least some of the threads of the shaft are accessible for screwing the nut element onto the protruding part of the shaft of the bolt.

As mentioned above, the fastening arrangement may optionally comprise a second bracket, which is adapted for attachment of a third object, e.g. the seat belt anchor, to the second object, e.g. the vehicle body floor. The third object is attached to the second bracket. The method then comprises the above-mentioned steps a), b) and c) and in addition:
a1) placing the second bracket at the second side of the second object such that the bolt extends through the second bracket, e.g. through a hole or a slot in the second bracket.

After step a1) the shaft of the bolt extends through the second object and the second bracket, such that a free end of the shaft protrudes from the second bracket and at least some of the threads of the shaft are accessible for screwing the nut element onto the protruding part of the shaft of the bolt.

Step a1) is carried out after step a) and before step b). In step b) the first bracket is placed on the second bracket, such that the nut element is located at the free end of the shaft of the bolt. In step c) the nut element is rotated around the bolt thereby engaging the threads of the nut with the threads of the bolt and attaching the first object and the third object to the second object by means of the same nut element.

The first bracket and the fastening arrangement according to the invention are useful when attaching a seat belt to a floor or a wall of the vehicle. They may be used both in the front seat and in the rear seat. They may also be used for attaching other belts or straps, e.g. intended for cargo. They may also be used for attaching other vehicle parts, such as body portions. They may be useful in a vehicle, such as a car, van, bus, truck or lorry, in a rail-bound vehicle, such as a train wagon, in a vessel, such as a hovercraft or a ferry, or in an airborne vessel, such as an aeroplane or a helicopter.

The fastening arrangement as described herein may be a suitable solution when only limited space is available at the other side of the object, whereto the vehicle part is to be attached.

### BRIEF DESCRIPTION OF THE DRAWINGS

The present invention will hereinafter be further explained by means of non-limiting examples with reference to the appended drawings wherein:
- Fig. 1: illustrates a bracket according to a first embodiment of the invention comprising an integrated nut element in a top perspective view,
- Fig. 2: illustrates the bracket of Figure 1 in a bottom perspective view,
- Fig. 3: illustrates a cross-section of the bracket of Figure 1,
- Fig. 4: illustrates a fastening arrangement according to the invention for attachment of the first bracket to a vehicle body floor before attachment,
- Fig. 5: illustrates the fastening arrangement of Fig. 4 after attachment,
- Fig. 6: illustrates an exemplary bracket in a top view,
- Fig. 7: illustrates a cross-section of the bracket of Figure 6, and
- Fig. 8: illustrates a method for attaching a first object to a second object by means of the fastening arrangement.

It should be noted that the appended drawings are not necessarily drawn to scale and that the dimensions of some features of the present invention may have been exaggerated for the sake of clarity.

### DETAILED DESCRIPTION

The invention will, in the following, be exemplified by embodiments. It should however be realized that the embodiments are included in order to explain principles of the invention and not to limit the scope of the invention, defined by the appended claims. Details from two or more of the embodiments may be combined with each other.

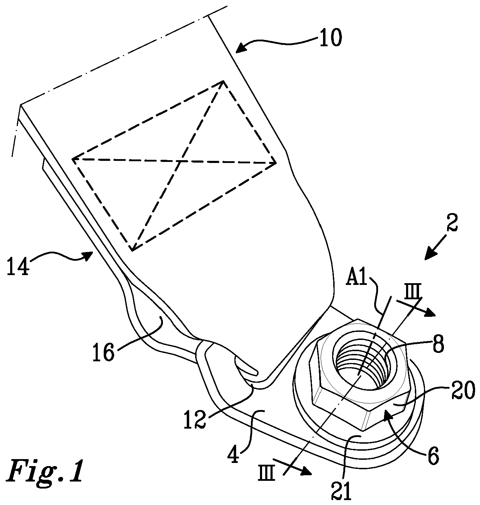

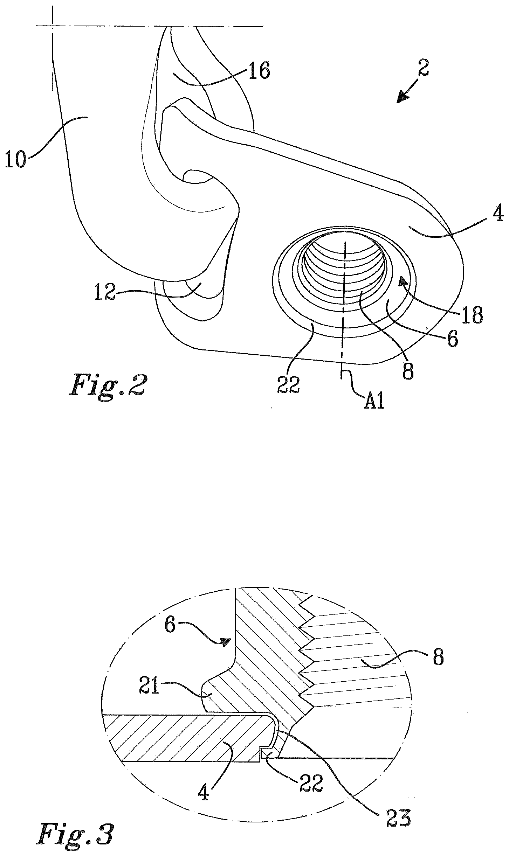

Figures 1 and 2 schematically illustrates a bracket 2 according to a first embodiment of the invention comprising a bracket portion 4 and an integrated nut element 6 in a top perspective view and a bottom perspective view, respectively. Figure 3 shows a cross-section along lines III-III.

The nut element 6 is attached to the bracket portion 4 in such a way that the nut element 6 will not fall off. Yet the nut element 6 is free to rotate around a rotational axis A1 in relation to the bracket portion 4. The nut element 6 is provided with threads 8. The bracket portion 4 is adapted for attachment of a first object, illustrated as a belt 10, to the bracket portion 4. In the illustrated example, the bracket portion 4 is provided with an attachment member in the form of an opening 12, through which the belt 10 passes. An end 14 of the belt 10 goes through the opening 12 and has been double-folded and attached to another portion of the belt 10 at a location before the opening 12, e.g. by means of gluing and/or sewing. Thereby a loop 16 is formed in the belt 10, by means of which the belt 10 is attached to the bracket 2.

The nut element 6 goes through an opening 18 in the bracket portion 4, here illustrated as an annular opening 18. The rotational axis A1 is substantially perpendicular to the portion of the bracket portion 4 surrounding the opening 18. A nut portion 20 of the nut element 6 is located on one side of the bracket portion 4, which is the upper side in Figure 1. As shown in Figure 3, below the nut portion 20 the nut element 6 comprises a collar 21 having a larger diameter than the nut portion 20. On the lower side of the bracket portion 4 , which is best seen in Figure 2, a flange 22 of the nut element 6 retains the nut element 6 in the bracket portion 4. Both the collar 21 and the flange 22 have a larger diameter than the annular opening 18 in the bracket portion 4. Therefore the nut element 6 is retained in the bracket portion 4 and will not fall out. No additional element is required for keeping the nut element 6 in place in the bracket 2. The flange 22 may be manufactured by pressing a lower portion of the nut element 6 when it has been placed in the bracket portion 4 from below e.g. by a ball-shaped member, thereby forcing the lower portion of the nut element 6 to bend sideways to form the flange 22. There is an interspace 23 between the bracket portion 4 and the nut portion element 6, such that the nut element 6 is free to rotate in relation to the bracket portion 4. Preferably, there is an interspace both in the radial and the axial direction. Hence, although the nut element 6 is substantially restricted from movement in a direction along the rotational axis A1, it is free to rotate in relation to the bracket portion 4. This rotation may be used to tighten the nut element 6 to a bolt, as is further explained below.

Since the nut element 6 is integrated into the bracket 2 it is secured that the correct size and type of nut is utilized, which enhances quality and security of the attachment. Purely as an example, if the bracket 2 is used for a seat belt of a vehicle, it is important from a safety point of view that the seat belt is correctly attached to the vehicle, such that the seat belt can take the loads arising in a potential collision involving the vehicle.

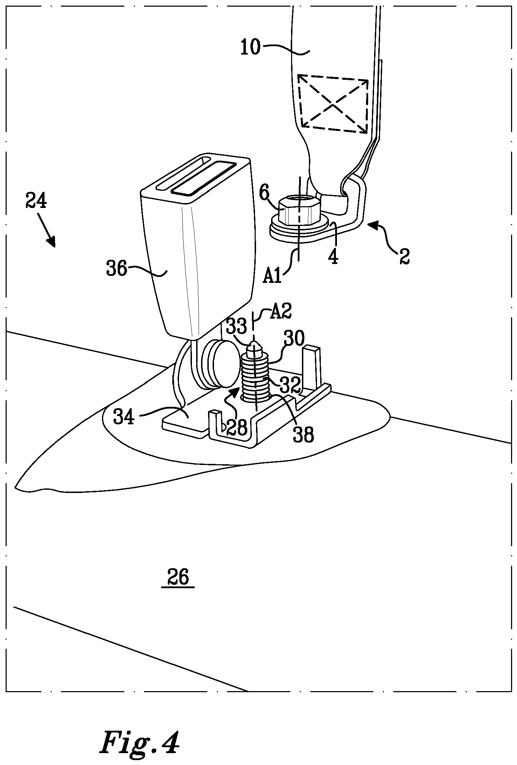

Figure 4 illustrates a fastening arrangement 24 according to the invention for attachment of the bracket 2 to a second object, here represented by a vehicle body floor 26. The bracket 2 described in conjunction with Figure 1-3 forms a first bracket 2 of the illustrated fastening arrangement 24. A first object, here represented by the belt 10, is attached to the attachment member 12 of the first bracket 2. The intention is to attach the belt 10 to the vehicle body floor 26.

The fastening arrangement 24 comprises the first bracket 2 including the nut element 6 and a bolt 28. The bolt 28 comprises a head and a shaft 30. At least a portion of the shaft 30 comprises threads 32 adapted to cooperate with the threads 8 of the nut element 6.

The centreline of the shaft 30 defines a longitudinal axis A2 of the bolt 28. The head is located at the underside of the vehicle body floor 26 and can hence not be seen in Figure 4. The shaft extends through the vehicle body floor 26, such that a free end 33 of the shaft 30 protrudes from the vehicle body floor 26. The bolt 28 may be a stud bolt having a thin head, which minimizes the need for space for housing the head below the vehicle body floor 26.

As an option, which is illustrated in Figure 4, the fastening arrangement 24 also comprises a second bracket 34, which e.g. is adapted for attachment of a seat belt anchor 36. The second bracket 34 comprises an opening 38 for receiving the bolt 28, such that the bolt can extend through the second bracket 34 and protrude from the second bracket 34 towards the first bracket 2. The seat belt anchor 36 is intended for use by a first potential rear seat passenger when fastening his or her seat belt, while the belt 10 belongs to a seat belt intended for use by a second potential rear seat passenger seated beside the first potential rear seat passenger. The seat belt anchor 36 or the belt 10 may also be used in other positions in the vehicle, e.g. at another seat or for cargo.

In order to attach the first bracket 2 to the vehicle body floor 26, the first bracket 2 is placed at the free end 33 of the bolt 28, such that the nut element 6 is located at the free end 33 of the shaft 30 of the bolt 28. Preferably, the rotational axis A1 of the nut element is aligned with the longitudinal axis A2 of the bolt 28. The second bracket 34 is then located between the first bracket 2 and the vehicle body floor 26. Thereafter the nut element 6 is rotated such that the threads 8 of the nut element 6 cooperate with the threads 32 of the shaft 30, thereby moving the first bracket 2 along the shaft 30 towards the head of the bolt 28. As described above, the nut element 6 is free to rotate in relation to the bracket portion 4. There is enough space available for turning the nut element 6 by help of a tool. It may e.g. be turned by a predefined torque, which has been selected to fulfil quality and/or safety criteria.

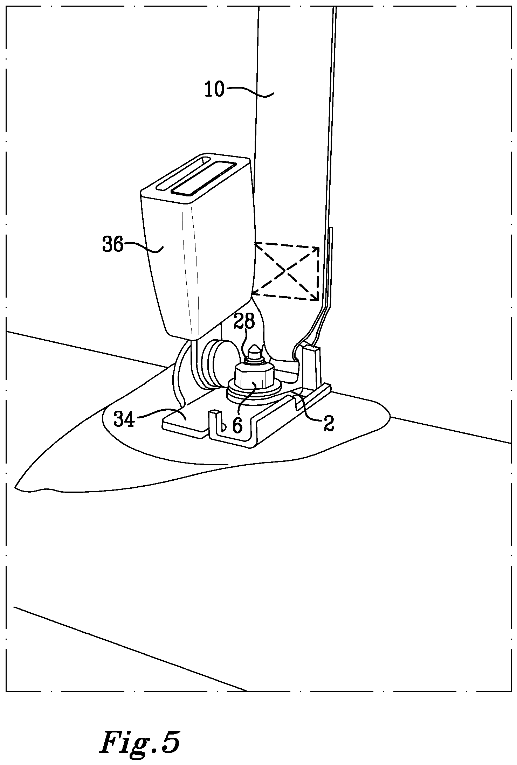

Eventually the situation illustrated in Figure 5 is obtained, wherein the same nut element 6 and the same bolt 28 are utilized for attaching two different objects to the vehicle body floor 26, i.e. the first bracket 2 and the second bracket 34. Thereby, both the seat belt anchor 36 and the belt 10 are attached by the same nut element 6 and the same bolt 28 to the vehicle body floor 26. Hence one single bolt and nut connection is enough for attaching two different components, i.e. the seat belt anchor 36 and the belt 10. Since the nut element 6 is retained by the bracket portion 4, it is ascertained that the nut element 6 is not dropped during attachment. Further since the nut element 6 is incorporated into the first bracket 2, it is ascertained that the first bracket 2, attaching the belt 10, will not be forgotten when mounting the second bracket 34.

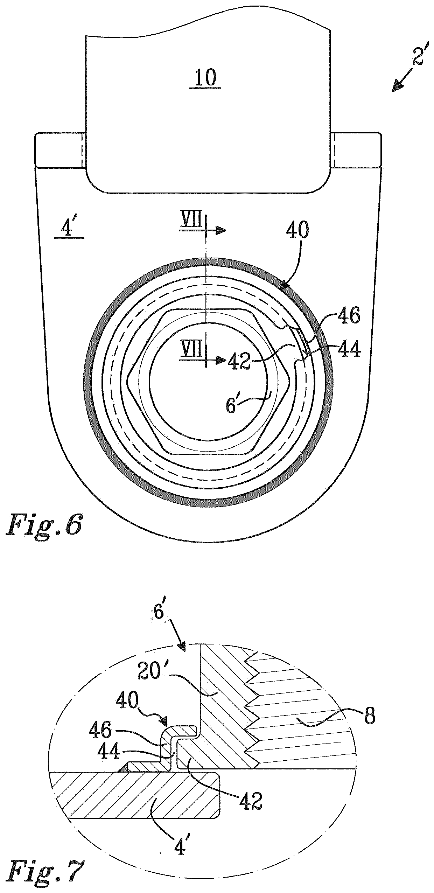

Figures 6 and 7 schematically illustrate an exemplary bracket 2' in a top view and in a cross-sectional view.

The bracket 2' comprises a bracket portion 4' and an integrated nut element 6'. The bracket portion 4' is adapted for attachment of a first object, such as a belt 10. The nut element 6' goes through an opening 18' in the bracket portion 4, e.g. an annular opening 18'. A nut portion 20' of the nut element 6' is located on one side of the bracket portion 4', which is the upper side in Figure 7. The bracket portion 4' comprises a retaining member 40, which is located at the same side of the bracket portion 4' as the nut element 6'. The retaining member 40 prevents the nut element 6' from falling out of the bracket portion 4', e.g. by gripping around a flange 42 comprised in the nut portion 20' of the nut element 6'. Thereby the nut element 6' is substantially restricted from movement in a direction along the rotational axis A1. There is an interspace 44 between a throat portion 46 of the retaining member 40 and the nut portion 20', such that the nut element 6' is free to rotate in relation to the bracket portion 4'. Preferably, there is an interspace both in the radial and the axial direction. Part of the nut portion 20' protrudes above the retaining member 40, such that it is accessible by e.g. a tool for tightening the nut element 6' to a bolt.

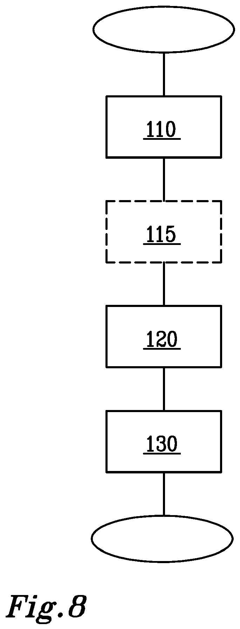

Figure 8 shows a method for attaching a first object, e.g. the belt 10, to a second object, e.g. the vehicle body floor 26 by means of a fastening arrangement 24 as disclosed herein. See also Figures 4 and 5. The first object, i.e. the belt 10, is attached to the first bracket 2, 2' as described above. The second object, i.e. the vehicle body floor 26, has a first side, facing upwards in Figures 4 and 5 and a second opposite side, hidden in Figures 4 and 5. Optional steps are illustrated by dashed boxes.

For a fastening arrangement comprising the first bracket 2, 2', the method comprises: 110: Placing the bolt 28 in the second object 26 with the head of the bolt 28 at the first side of the second object 26, the shaft 30 of the bolt 28 extending through the second object 26, such that a free end 33 protrudes from the second side of the second object 26, 120: Placing the first bracket 2, 2' at the second side of the second object 26, such that the nut element 6, 6' is located at the free end 33 of the shaft 30 of the bolt 28, 130: Rotating the nut element 6, 6' around the bolt 28 thereby engaging the threads 8 of the nut element 6, 6' with the threads 32 of the bolt 28 and attaching the first object 10 to the second object 26.

As mentioned above, the fastening arrangement 24 may, as an option, comprise a second bracket 34, which is adapted for attachment of a third object, e.g. the seat belt anchor 36, to the second object, e.g. the vehicle body floor 26. The third object, e.g. the seat belt anchor 36 is attached to the second bracket 34. The method then comprises the additional step of:
115: Placing the second bracket 34 at the second side of the second object, e.g. the vehicle body floor 26, such that the bolt 28 extends through the second bracket 34, e.g. through the hole 38 or a slot in the second bracket 34.

Step 115 is carried out after step 110 and before step 120. In step 120, the first bracket 2, 2' is placed on the second bracket 34, such that the nut element 6, 6' is located at the free end 33 of the shaft 30 of the bolt 28. In step 130, the nut element 6, 6' is rotated around the bolt 28 thereby engaging the threads 8 of the nut element 6, 6' with the threads 32 of the bolt 28 and attaching the first object 10 and the third object 36 to the second object 26 by means of the same nut element 6, 6'.

According to this variant of the method, the same nut element 6, 6' and the same bolt 28 are utilized for attaching two different objects to the vehicle body floor 26, i.e. the first bracket 2, 2' and the second bracket 34. Thereby, both the seat belt anchor 36 and the belt 10 are attached by the same nut element 6, 6' and the same bolt 28 to the vehicle body floor 26. Hence one single bolt and nut connection is enough for attaching two different components, i.e. the seat belt anchor 36 and the belt 10. Since the nut element 6 is retained by the bracket portion 4, 4', it is ascertained that the nut element 6, 6' is not dropped during attachment. Further since the nut element 6, 6' is incorporated into the first bracket 2, 2', it is ascertained that the first bracket 2, 2', attaching the belt 10, will not be forgotten when mounting the second bracket 34.

Further modifications of the invention within the scope of the appended claims are feasible. As such, the present invention should not be considered as limited by the embodiments and figures described herein. Rather, the full scope of the invention should be determined by the appended claims, with reference to the description and drawings.

## Claims

1. A belt bracket (2) comprising a bracket portion (4) and a nut element (6), said nut element (6) comprising threads (8),
said bracket portion (4) comprising an attachment member (12) adapted for attachment of a seat belt (10) to said bracket portion (4,), and
said nut element (6) going through an opening (18) in said bracket portion (4), said nut element (6) being integrated into said belt bracket (2), such that said nut element (6) is retained in said bracket portion (4), **characterized in that** said nut element is rotatable around a rotational axis (A1) in relation to said bracket portion (4), wherein said nut element (6) comprises a nut portion (20) located at a first side of said bracket portion (4), a collar (21) located below the nut portion (20) and on said first side of said bracket portion (4) and a flange (22) located in a recess of said bracket portion (4) on a second opposite side of said bracket portion (4),
said collar (21) having a larger diameter than said nut portion (20),
said collar (20) and said flange (22) having a larger diameter than said opening (18), therefore retaining said nut element (6) in said bracket portion (4),
an interspace (23) being located between said bracket portion (4) and said nut element (6), such that said nut element (6) is free to rotate in relation to said bracket portion (4).

2. The belt bracket (2) according to claim 1, wherein said flange (22) is formed by a lower portion of said nut element (6) being bent sideways to form said flange (22).

3. The belt bracket (2) according to claim 1 or 2, wherein said nut element (6) is substantially prevented from movement in relation to said bracket portion (4) in a direction along said rotational axis (A1).

4. A seat belt arrangement for a vehicle, said seat belt arrangement comprising a seat belt (10) and a belt bracket (2) according to any one of claims 1-3, wherein said seat belt (10) is attached to said belt bracket (2) by means of said attachment member (12), preferably an end (14) of said seat belt (10) is attached to said belt bracket (2).

5. A fastening arrangement (24) for attachment of a belt bracket (2) according to any one of claims 1- 3 to a body floor (26) of a vehicle, said fastening arrangement (24) comprising a bolt (28) and said belt bracket (2) according to any one of claims 1-3,
said bolt (28) comprising a head and a shaft (30), at least a portion of said shaft (30) comprising threads (32) adapted to cooperate with said threads (8) of said nut element (6).

6. The fastening arrangement (24) according to claim 5, further comprising a second bracket (34) adapted for attachment of a seat belt anchor (36) to said body floor (26), said second bracket (34) being adapted to be attached to said body floor (26) by means of said bolt (28) and said nut element (6), such that said belt bracket (2) and said second bracket (34) are attached to said body floor (26) by means of the same bolt (28) and the same nut element (6).

7. A use of a fastening arrangement (24) according to any one of claims 5-6 for attaching a seat belt (10) to a body floor (26) of a vehicle, wherein said attachment member (12) of said belt bracket (2) is used to attach said seat belt (10).

8. The use according to claim 7 of said fastening arrangement (24) according to claim 5 for attaching a seat belt (10) to said vehicle body floor (26) by means of said belt bracket (2), the use comprising attaching a seat belt anchor (36) by means of said second bracket (34), said seat belt (10) and said seat belt anchor (36) being fastened to the body floor (26) by the same bolt (28) and the same nut element (6).

9. A safety arrangement for a vehicle comprising a belt bracket (2) according to any one of claims 1-3, a seat belt arrangement according to claim 4 and/or a fastening arrangement (24) according to any one of claims 5-6.

10. A method for attaching a seat belt (10) to a body floor (26) of a vehicle by means of a fastening arrangement (24) according to any one of claims 5-6, said seat belt (10) being attached to said belt bracket (2), said body floor (26) having a first side and a second opposite side, said method comprising
a) placing said bolt (28) in said body floor (26) with said head of said bolt (28) at said first side of said body floor (26), said shaft (30) of said bolt (28) extending through said body floor (26), such that a free end (33) protrudes from said second side of said body floor (26),
b) placing said belt bracket (2) at said second side of said body floor (26), such that said nut element (6) is located at the free end (33) of said shaft (30) of said bolt (28),
c) rotating said nut element (6) around said bolt (28) thereby engaging said threads (8) of said nut with said threads (32) of said bolt (28) and attaching said seat belt (10) to said body floor (26).

11. The method according to claim 10 further comprising
- pressing a lower portion of said nut element (6) when it has been placed in said bracket portion (4) from below, thereby forcing said lower portion of said nut element (6) to form said flange (22).

12. The method according to claim 10 or 11 further comprising attaching a seat belt anchor (36) to said body floor (26) by means of said fastening arrangement (24) according to claim 6, said seat belt anchor (36) being attached to said second bracket (34),
said method comprising steps a), b) and c) and in addition
a1) placing said second bracket (34) at said second side of said body floor (26), such that said bolt (28) extends through said second bracket (34), e.g. through a hole (38) or a slot in said second bracket (34),
in step b) of claim 10 placing said belt bracket (2) on said second bracket (34), such that said nut element (6) is located at said free end (33) of said shaft (30) of said bolt (28),
in step c) of claim 10 rotating said nut element (6) around said bolt (28) thereby engaging said threads (8) of said nut element (6) with said threads (32) of said bolt (28) and attaching said seat belt (10) and said seat belt anchor (36) to body floor (26) by means of the same nut element (6).

## Patentansprüche

1. Gurthalterung (2), die einen Halterungsabschnitt (4) und ein Mutterelement (6) umfasst, wobei das Mutterelement (6) ein Gewinde (8) umfasst,
wobei der Halterungsabschnitt (4) ein Befestigungselement (12) umfasst, das zur Befestigung eines Sicherheitsgurts (10) am Halterungsabschnitt (4) eingerichtet ist, und
wobei das Mutterelement (6) durch eine Öffnung (18) in dem Halterungsabschnitt (4) verläuft,
wobei das Mutterelement (6) in die Gurthalterung (2) integriert ist, sodass das Mutterelement (6) im Halterungsabschnitt (4) gehalten wird, **dadurch gekennzeichnet, dass** das Mutterelement in Bezug zum Halterungsabschnitt (4) um eine Drehachse (A1) drehbar ist,
wobei das Mutterelement (6) einen Mutterabschnitt (20), der sich auf einer ersten Seite des Halterungsabschnitts (4) befindet, eine Manschette (21), die sich unterhalb des Mutterabschnitts (20) und auf der ersten Seite des Halterungsabschnitts (4) befindet, und einen Flansch (22), der sich in einer Aussparung des Halterungsabschnitts (4) auf einer zweiten, gegenüberliegenden Seite des Halterungsabschnitts (4) befindet, umfasst,
wobei die Manschette (21) einen größeren Durchmesser als der Mutterabschnitt (20) aufweist,
wobei die Manschette (20) und der Flansch (22) einen größeren Durchmesser als die Öffnung (18) aufweisen und daher das Mutterelement (6) im Halterungsabschnitt (4) halten,
wobei sich ein Zwischenraum (23) zwischen dem Halterungsabschnitt (4) und dem Mutterelement (6) befindet, sodass sich das Mutterelement (6) in Bezug zum Halterungsabschnitt (4) frei drehen kann.

2. Gurthalterung (2) nach Anspruch 1, wobei der Flansch (22) durch einen unteren Abschnitt des Mutterelements (6), der zur Seite gebogen wird, um den Flansch (22) auszubilden, ausgebildet wird.

3. Gurthalterung (2) nach Anspruch 1 oder 2, wobei das Mutterelement (6) im Wesentlichen an einer Bewegung in Bezug zum Halterungsabschnitt (4) in einer Richtung entlang der Drehachse (A1) gehindert wird.

4. Sicherheitsgurtanordnung für ein Fahrzeug, wobei die Sicherheitsgurtanordnung einen Sicherheitsgurt (10) und eine Gurthalterung (2) nach einem der Ansprüche 1-3 umfasst, wobei der Sicherheitsgurt (10) über ein Befestigungselement (12) an der Gurthalterung (2) befestigt ist, wobei vorzugsweise ein Ende (14) des Sicherheitsgurts (10) an der Gurthalterung (2) befestigt ist.

5. Arretierungsanordnung (24) zum Befestigen einer Gurthalterung (2) nach einem der Ansprüche 1-3 an einem Karosserieboden (26) eines Fahrzeugs, wobei die Arretierungsanordnung (24) einen Bolzen (28) und die Gurthalterung (2) nach einem der Ansprüche 1-3 umfasst, wobei der Bolzen (28) einen Kopf und einen Schaft (30) umfasst, wobei mindestens ein Abschnitt des Schafts (30) ein Gewinde (32) umfasst, das dazu eingerichtet ist, mit dem Gewinde (8) des Mutterelements (6) zusammenzuwirken.

6. Arretierungsanordnung (24) nach Anspruch 5, die ferner eine zweite Halterung (34) umfasst, die dazu eingerichtet ist, eine Sicherheitsgurtverankerung (36) am Karosserieboden (26) zu befestigen, wobei die zweite Halterung (34) dazu eingerichtet ist, über den Bolzen (28) und das Mutterelement (6) am Karosserieboden (26) befestigt zu werden, sodass die Gurthalterung (2) und die zweite Halterung (34) über denselben Bolzen (28) und dasselbe Mutterelement (6) am Karosserieboden (26) befestigt sind.

7. Verwendung für eine Arretierungsanordnung (24) nach einem der Ansprüche 5-6 zum Befestigen eines Sicherheitsgurts (10) an einem Karosserieboden (26) eines Fahrzeugs, wobei das Befestigungselement (12) der Gurthalterung (2) verwendet wird, um den Sicherheitsgurt (10) zu befestigen.

8. Verwendung nach Anspruch 7 der Arretierungsanordnung (24) nach Anspruch 5 zum Befestigen eines Sicherheitsgurts (10) am Fahrzeugkarosserieboden (26) über die Gurthalterung (2), wobei die Verwendung das Befestigen einer Sicherheitsgurtverankerung (36) über die zweite Halterung (34) umfasst, wobei der Sicherheitsgurt (10) und die Sicherheitsgurtverankerung (36) über denselben Bolzen (28) und dasselbe Mutterelement (6) am Karosserieboden (26) befestigt werden.

9. Sicherheitsanordnung für ein Fahrzeug, die eine Gurthalterung (2) nach einem der Ansprüche 1-3, eine Sicherheitsgurtanordnung nach Anspruch 4 und/oder eine Arretierungsanordnung (24) nach einem der Ansprüche 5-6 umfasst.

10. Verfahren zum Befestigen eines Sicherheitsgurts (10) an einem Karosserieboden (26) eines Fahrzeugs über eine Arretierungsanordnung (24) nach einem der Ansprüche 5-6, wobei der Sicherheitsgurt (10) an der Gurthalterung (2) befestigt wird, wobei der Karosserieboden (26) eine erste Seite und eine zweite, gegenüberliegende Seite aufweist, wobei das Verfahren Folgendes umfasst:
a) Platzieren des Bolzens (28) im Karosserieboden (26), wobei sich der Kopf des Bolzens (28) auf der ersten Seite des Karosseriebodens (26) befindet, wobei sich der Schaft (30) des Bolzens (28) durch den Karosserieboden (26) erstreckt, sodass ein freies Ende (33) aus der zweiten Seite des Karosseriebodens (26) vorsteht,
b) Platzieren der Gurthalterung (2) auf der zweiten Seite des Karosseriebodens (26), sodass sich das Mutterelement (6) am freien Ende (33) des Schafts (30) des Bolzens (28) befindet,
c) Drehen des Mutterelements (6) um den Bolzen (28), um dadurch mit dem Gewinde (8) der Mutter in das Gewinde (32) des Bolzens (28) einzugreifen und den Sicherheitsgurt (10) am Karosserieboden (26) zu befestigen.

11. Verfahren nach Anspruch 10, ferner Folgendes umfassend:
- Drücken eines unteren Abschnitts des Mutterelements (6), wenn es im Halterungsabschnitt (4) platziert wurde, von unten, wodurch der untere Abschnitt des Mutterelements (6) dazu gebracht wird, den Flansch (22) auszubilden.

12. Verfahren nach Anspruch 10 oder 11, ferner das Befestigen der Sicherheitsgurtverankerung (36) am Karosserieboden (26) über die Arretierungsanordnung (24) nach Anspruch 6 umfassend, wobei die Sicherheitsgurtverankerung (36) an der zweiten Halterung (34) befestigt wird,
wobei das Verfahren die Schritte a), b) und c) umfasst und zusätzlich
a1) Platzieren der zweiten Halterung (34) auf der zweiten Seite des Karosseriebodens (26), sodass sich der Bolzen (28) durch die zweite Halterung (34), z. B. durch ein Loch (38) oder einen Schlitz in der zweiten Halterung (34) erstreckt,
wobei in Schritt b) von Anspruch 10 die Gurthalterung (2) so auf der zweiten Halterung (34) platziert wird, dass sich das Mutterelement (6) am freien Ende (33) des Schafts (30) des Bolzens (28) befindet,
wobei in Schritt c) von Anspruch 10 das Mutterelement (6) um den Bolzen (28) gedreht wird, wodurch das Gewinde (8) des Mutterelements (6) in das Gewinde (32) des Bolzens (28) eingreift und den Sicherheitsgurt (10) und die Sicherheitsgurtverankerung (36) über dasselbe Mutterelement (6) am Karosserieboden (26) befestigt.

## Revendications

1. Support de ceinture (2) comprenant une partie support (4) et un élément écrou (6), ledit élément écrou (6) comprenant des filets (8),
ladite partie support (4) comprenant un élément de fixation (12) adapté pour fixer une ceinture de sécurité (10) à ladite partie support (4), et
ledit élément écrou (6) traversant une ouverture (18) dans ladite partie support (4),
ledit élément écrou (6) étant intégré dans ledit support de ceinture (2), de sorte que ledit élément écrou (6) est retenu dans ladite partie support (4), **caractérisé en ce que** ledit élément écrou peut tourner autour d'un axe rotatif (A1) par rapport à ladite partie support (4),
ledit élément écrou (6) comprenant une partie écrou (20) située au niveau d'un premier côté de ladite partie support (4), un collier (21) situé sous la partie écrou (20) et sur ledit premier côté de ladite partie support (4) et une bride (22) située dans un évidement de ladite partie support (4) sur un second côté opposé de ladite partie support (4),
ledit collier (21) ayant un diamètre plus grand que celui de ladite partie écrou (20),
ledit collier (20) et ladite bride (22) ayant un diamètre plus grand que celui de ladite ouverture (18), retenant ainsi ledit élément écrou (6) dans ladite partie support (4),
un espace intermédiaire (23) étant situé entre ladite partie support (4) et ledit élément écrou (6), de sorte que ledit élément écrou (6) est libre de tourner par rapport à ladite partie support (4).

2. Support de ceinture (2) selon la revendication 1, dans lequel ladite bride (22) est formée par une partie inférieure dudit élément écrou (6) pliée latéralement pour former ladite bride (22).

3. Support de ceinture (2) selon la revendication 1 ou 2, dans lequel ledit élément écrou (6) est sensiblement empêché de se déplacer par rapport à ladite partie support (4) dans une direction le long dudit axe rotatif (A1).

4. Agencement de ceinture de sécurité pour un véhicule, ledit agencement de ceinture de sécurité comprenant une ceinture de sécurité (10) et un support de ceinture (2) selon l'une quelconque des revendications 1 à 3, ladite ceinture de sécurité (10) étant fixée audit support de ceinture (2) au moyen dudit élément de fixation (12), de préférence une extrémité (14) de ladite ceinture de sécurité (10) est fixée audit support de ceinture (2).

5. Agencement de fixation (24) pour la fixation d'un support de ceinture (2) selon l'une quelconque des revendications 1 à 3 à un plancher de carrosserie (26) d'un véhicule, ledit agencement de fixation (24) comprenant un boulon (28) et ledit support de ceinture (2) selon l'une quelconque des revendications 1 à 3, ledit boulon (28) comprenant une tête et un arbre (30), au moins une partie dudit arbre (30) comprenant des filets (32) adaptés pour coopérer avec lesdits filets (8) dudit élément écrou (6).

6. Agencement de fixation (24) selon la revendication 5, comprenant en outre un second support (34) adapté pour la fixation d'un ancrage de ceinture de sécurité (36) audit plancher de carrosserie (26), ledit second support (34) étant adapté pour être fixé audit plancher de carrosserie (26) au moyen dudit boulon (28) et dudit élément écrou (6), de sorte que ledit support de ceinture (2) et ledit second support (34) sont fixés sur ledit plancher de carrosserie (26) au moyen du même boulon (28) et du même élément écrou (6).

7. Utilisation d'un agencement de fixation (24) selon l'une quelconque des revendications 5 et 6 pour fixer une ceinture de sécurité (10) à un plancher de carrosserie (26) d'un véhicule, ledit élément de fixation (12) dudit support de ceinture (2) étant utilisé pour fixer ladite ceinture de sécurité (10).

8. Utilisation selon la revendication 7 dudit agencement de fixation (24) selon la revendication 5 pour fixer une ceinture de sécurité (10) audit plancher de carrosserie de véhicule (26) au moyen dudit support de ceinture (2), l'utilisation comprenant la fixation d'un ancrage de ceinture de sécurité (36) au moyen dudit second support (34), ladite ceinture de sécurité (10) et ledit ancrage de ceinture de sécurité (36) étant fixés au plancher de carrosserie (26) par le même boulon (28) et le même élément écrou (6).

9. Agencement de sécurité pour un véhicule comprenant un support de ceinture (2) selon l'une quelconque des revendications 1 à 3, un agencement de ceinture de sécurité selon la revendication 4 et/ou un agencement de fixation (24) selon l'une quelconque des revendications 5 et 6.

10. Procédé de fixation d'une ceinture de sécurité (10) à un plancher de carrosserie (26) d'un véhicule au moyen d'un agencement de fixation (24) selon l'une quelconque des revendications 5 et 6, ladite ceinture de sécurité (10) étant fixée audit support de ceinture (2), ledit plancher de carrosserie (26) ayant un premier côté et un second côté opposé, ledit procédé consistant à :
a) placer ledit boulon (28) dans ledit plancher de carrosserie (26) avec ladite tête dudit boulon (28) au niveau dudit premier côté dudit plancher de carrosserie (26), ledit arbre (30) dudit boulon (28) s'étendant à travers ledit plancher de carrosserie (26), de sorte qu'une extrémité libre (33) fait saillie depuis ledit second côté dudit plancher de carrosserie (26),
b) placer ledit support de ceinture (2) au niveau dudit second côté dudit plancher de carrosserie (26), de sorte que ledit élément écrou (6) est situé au niveau de l'extrémité libre (33) dudit arbre (30) dudit boulon (28),
c) faire tourner ledit élément écrou (6) autour dudit boulon (28), engageant ainsi lesdits filets (8) dudit écrou avec lesdits filets (32) dudit boulon (28) et fixant ladite ceinture de sécurité (10) audit plancher de carrosserie (26).

11. Procédé selon la revendication 10, consistant en outre à :
- presser une partie inférieure dudit élément écrou (6) lorsqu'il a été placé dans ladite partie support (4) par le bas, forçant ainsi ladite partie inférieure dudit élément écrou (6) à former ladite bride (22).

12. Procédé selon la revendication 10 ou 11 consistant en outre à fixer un ancrage de ceinture de sécurité (36) audit plancher de carrosserie (26) au moyen dudit agencement de fixation (24) selon la revendication 6, ledit ancrage de ceinture de sécurité (36) étant fixé sur ledit second support (34),
ledit procédé comprenant les étapes a), b) et c) et en outre l'étape consistant à :
a1) placer ledit second support (34) au niveau dudit second côté dudit plancher de carrosserie (26), de sorte que ledit boulon (28) s'étende à travers ledit second support (34), par exemple à travers un trou (38) ou une fente dans ledit second support (34),
à l'étape b) selon la revendication 10, placer ledit support de ceinture (2) sur ledit second support (34), de sorte que ledit élément écrou (6) est situé au niveau de ladite extrémité libre (33) dudit arbre (30) dudit boulon (28),
à l'étape c) selon la revendication 10, faire tourner ledit élément écrou (6) autour dudit boulon (28), engageant ainsi lesdits filets (8) dudit élément écrou (6) avec lesdits filets (32) dudit boulon (28) et fixant ladite ceinture de sécurité (10) et ledit ancrage de ceinture de sécurité (36) au plancher de carrosserie (26) par le biais du même élément écrou (6).
